# FASCICULE DE BREVET EUROPEEN

(11) **EP 3 547 852 B1**
(45) Date de publication et mention de la délivrance du brevet: **26.02.2025**
(21) Numéro de dépôt: 17804915.1
(22) Date de dépôt: 29.11.2017
(51) Int. Cl.: A23L 33/19, A23C 9/13, A23C 21/00

(54) **COMPOSITION NUTRITIONNELLE COMPRENANT DES PROTÉINES DE LACTOSÉRUM OU DES PROTÉINES SOLUBLES DE LAIT STABLE AUX TRAITEMENTS THERMIQUES**
ERNÄHRUNGSZUSAMMENSETZUNG MIT MOLKEPROTEINEN ODER LÖSLICHEN MILCHPROTEINEN, DIE GEGENÜBER WÄRMEBEHANDLUNGEN STABIL SIND
NUTRITIONAL COMPOSITION COMPRISING LACTOSERUM PROTEINS OR SOLUBLE MILK PROTEINS THAT IS STABLE TO HEAT TREATMENTS

(30) Priorité: 29.11.2016 FR 1661662
(43) Date de publication de la demande: 09.10.2019
(73) Titulaire: Groupe Lactalis, 53000 Laval (FR)
(72) Inventeur: GUIRADO, Christophe, 35500 Vitre (FR)
(74) Mandataire: Cabinet Le Guen Maillet
(86) Numéro de dépôt international: PCT/EP2017/080864
(87) Numéro de publication internationale: WO 2018/099996

(56) Documents cités:
- EP-A1- 1 543 734
- WO-A1-2006/034856
- WO-A2-99/56563
- US-A1- 2012 015 092

## Description

La présente invention concerne une composition nutritionnelle liquide comprenant des protéines de lactosérum ou des protéines solubles de lait, la composition étant stable aux traitements thermiques, ainsi qu'un procédé de préparation d'une telle composition.

Des compositions nutritionnelles, par exemple sous forme de boissons, spécifiquement adaptées à la condition de personnes telles que des personnes âgées, des personnes malades ou en convalescence, mais encore des sportifs, des personnes actives ou des enfants, sont développées et proposées afin de leur apporter les composés nutritifs répondant à leurs besoins et qu'ils ne trouvent pas, ou en quantité suffisante, dans leur alimentation.

EP1543734 A1 divulgue une composition nutritionnelle, présentant un pH de 3,8 et comprenant 3% de protéines de lactosérum, de l'acide gluconique et de l'acide phosphorique. Cette composition se trouve sous forme de gel, de par la présence d'agent gélifiant.

En nutrition clinique par exemple, la complémentation à l'aide de compositions nutritionnelles a pour but, principalement, la renutrition de la personne dénutrie ou l'anticipation d'un état de dénutrition susceptible de survenir en cas d'hospitalisation ou de maladie. La dénutrition peut se définir comme un déséquilibre entre apports et besoins. Une telle complémentation a pour but d'apporter principalement des calories et/ou des protéines. Chez la personne active et le sportif également, les produits de complémentation sont utilisés afin d'apporter les calories ou les protéines nécessaires au soutien de l'activité physique de l'effort et d'une meilleure récupération.

Les compositions nutritionnelles enrichies en protéines et utilisées dans de telles situation incluent en tant que sources de protéines, des protéines d'origine laitière telles que les caséines, les protéines de lactosérum, les protéines solubles issues du lait ou les protéines d'origine végétale, telles que des protéines de soja. Parmi ces sources de protéines, les protéines de lactosérum ou les protéines solubles du lait sont considérées comme très intéressantes sur le plan nutritionnel et médical. Ce sont des protéines à digestion dite rapide, c'est à dire dont les acides aminés apparaissent rapidement en forte concentration dans le plasma sanguin. A titre de comparaison, la caséine présente une vitesse de digestion beaucoup plus faible. Les protéines de lactosérum ou les protéines solubles du lait présentent également un profil en acides aminés riche en acides aminés essentiels, ainsi qu'en acides aminés branchés, tels que la leucine. La quantité et la qualité des acides aminés apportés au cours de la supplémentation sont essentielles. Par exemple, des études indiquent que la supplémentation en protéines de lactosérum ou en protéines solubles du lait, riches en leucine, est une voie possible pour prévenir la sarcopénie. A ce titre, les protéines de lactosérum ou les protéines solubles du lait se sont avérées efficaces dans la stimulation de la synthèse musculaire (Farnfield et al. 2005).

En tenant compte de l'intérêt nutritionnel et médical des protéines solubles du lait ou du lactosérum il apparaît que l'utilisation de cette source de protéines dans la formulation de compositions nutritionnelles est particulièrement avantageuse.

Cependant, les protéines de lactosérum ou les protéines solubles du lait sont sensibles aux traitements thermiques, tels que la thermisation, la pasteurisation et la stérilisation qui peuvent être techniquement réalisées par traitements de type U.H.T ou bien par traitement autoclave, particulièrement à des pH proches de la neutralité, notamment à des pH de 6 à 8. Si la thermisation consiste à utiliser des températures de l'ordre de 57 à 68°C pendant quelques secondes, la pasteurisation consiste à chauffer un liquide pendant quelques minutes, à des températures de l'ordre de 70 à 100°C, puis à le refroidir le plus rapidement possible. Dans un procédé de stérilisation, la température est portée à une valeur supérieure à 100°C pendant quelques secondes, voire quelques minutes, avec des barèmes température - durée de traitement adaptés aux germes de référence considérés. De tels traitements induisent des phénomènes de dénaturation et de décantation des protéines de lactosérum ou celles solubles du lait, ainsi qu'une modification des caractéristiques de goût. Or, ces traitements sont nécessaires pour garantir l'absence de développement de germes tout au long de la durée de conservation du produit dans des conditions de conservation réfrigérées (< 6°C) ou bien à température ambiante pour des durées de conservation pouvant aller jusqu'à vingt-quatre mois.

Une solution parfois employée afin d'éviter ces phénomènes de sédimentation consiste à utiliser tout ou partie des protéines de lactosérum ou les protéines solubles du lait sous une forme hydrolysée. Néanmoins, les protéines sous forme hydrolysée apportent un défaut amer particulièrement inadapté dans une ingestion par voie orale.

La stabilité des protéines de lactosérum ou les protéines solubles du lait pendant et après les traitements thermiques peut être améliorée en ajustant le pH à une valeur dite de pH acide, par exemple de l'ordre de 2 à 4,5 dans le produit fini, c'est-à-dire prêt à être utilisé par le consommateur, les protéines demeurant stables à de tels pH. En outre, des valeurs de pH de l'ordre de 2 à 4,5 contribuent également à la stabilité microbiologique de la composition tout au long de sa période de conservation en conditions réfrigérées ou bien à température ambiante. L'abaissement du pH dans des compositions nutritionnelles est généralement réalisé à l'aide d'acides faibles tels que l'acide citrique, l'acide malique ou encore l'acide lactique. Cependant, le pouvoir tampon des protéines présentes dans la composition nécessite une grande quantité de ces acides pour atteindre un pH inférieur à 4,5. Or, la présence d'une importante quantité de ces acides dans la composition induit une sensation désagréable en bouche et d'acidité prononcée. Pour remédier à ce problème, une solution pourrait consister à utiliser de l'acide phosphorique en remplacement de l'acide citrique, malique ou lactique. L'acide phosphorique induit une sensation d'acidité nettement plus faible que les acides précités car utilisé en quantité moins importante pour un même pH d'obtention. En conséquence, la composition obtenue ne présenterait pas un goût acide prononcé. Cependant, les règlementations concernant les compositions nutritionnelles imposent des limitations quant à la quantité d'acide phosphorique, ou la teneur en phosphore, pouvant être ajoutée. A ce titre, on se référera à la Directive 1999/21/CE du 25/03/1999 relative aux aliments diététiques destinés à des fins médicales spéciales, ainsi qu'au Règlement du Parlement Européen et du Conseil du 16/12/2008 concernant les additifs alimentaires (R. 2008/1333-JOCE L 354/2008 p.16). Dès lors, l'utilisation de l'acide phosphorique seul pour abaisser le pH en dessous de 4,5 n'est pas envisageable.

Le but de la présente invention est de proposer un procédé permettant la préparation d'une composition nutritionnelle liquide comprenant, en tant que protéines, des protéines de lactosérum ou des protéines solubles de lait, et présentant un pH acide, compris entre 2 et 4,5, qui puisse être traitée thermiquement à des fins de conservation tout en demeurant stable, sans générer de phénomènes de décantation des protéines, et qui présente une bonne stabilité microbiologique jusqu'à sa date limite d'utilisation optimale ou DLUO.

En outre, un tel procédé doit pouvoir être accompli en mettant en oeuvre des étapes simples mais spécifiques.

Enfin, un autre but de l'invention est de proposer une telle composition qui présente de bonnes propriétés organoleptiques, sans excès de goût acide, malgré un pH acide.

A cet effet, l'invention concerne un procédé de préparation d'une composition nutritionnelle stable aux traitements thermiques comprenant entre 2 et 9 g de protéines de lactosérum ou des protéines solubles de lait pour 100 ml de composition liquide et présentant un pH compris entre 2 et 4,5, le procédé de préparation comprenant les étapes suivantes :
- préparation d'une matrice comprenant au moins 10 % d'eau, en poids, par rapport au poids total de la composition,
- ajout dans la matrice de glucono delta lactone
- hydrolyse de la glucono delta lactone durant 30 min. à 4 h,
- ajout d'un acide fort alimentaire avant, concomitamment ou après l'ajout ou l'hydrolyse de la glucono delta lactone.
- ajout des protéines de lactosérum ou des protéines solubles du lait dans la matrice après l'hydrolyse de la glucono delta lactone, lorsque le pH a atteint une valeur inférieure à 2,
- traitement thermique,
- conditionnement.

La composition nutritionnelle obtenue à l'issue du procédé est stable dans le temps non seulement d'un point de vue microbiologique mais également d'un point de vue de son aspect. Elle ne présente aucun phénomène de décantation des protéines. Cette stabilité est observée et maintenue sur toute la période allant jusqu'à la date limite d'utilisation optimale (DLUO), laquelle pouvant aller jusqu'à vingt-quatre mois. Elle présente en outre un goût légèrement acide lui conférant un caractère agréable et rafraîchissant. Lorsque de la glucono delta-lactone (GDL) est ajoutée dans la matrice contenant de l'eau, elle s'hydrolyse progressivement en acide gluconique entraînant alors une baisse progressive du pH de la matrice. La GDL est ajoutée de manière à compléter l'action de l'acide fort alimentaire sur la baisse de pH. En effet, le pH doit être abaissé jusqu'à atteindre une valeur selon laquelle les protéines de lactosérum ou les protéines solubles du lait sont stables et ne précipitent pas de manière à subir le traitement thermique qui suit. La GDL étant un acide faible, elle ne peut suffire à elle seule à abaisser le pH à la valeur souhaitée. Ainsi, l'acide fort alimentaire, tel que l'acide phosphorique, est nécessaire en complément pour atteindre cette valeur de pH, qui doit être inférieure à 2 avant l'ajout des protéines de lactosérum ou solubles du lait. Cependant, l'ajout de l'acide fort est réalisé à une quantité en dessous de la limite autorisée par les textes règlementaires, par exemple ceux pré-cités concernant l'acide phosphorique. La glucono delta-lactone est un acide organique alimentaire comme l'acide malique, l'acide citrique ou l'acide lactique. Cependant, elle confère un goût acide moins prononcé que ces derniers pour un même pH obtenu. Le choix de cet acide permet donc d'obtenir une composition pour laquelle la perception de l'acidité ainsi que l'astringence sont faibles tout en présentant un pH final acide.

Le respect d'un mode d'application spécifique de la GDL est indispensable : elle doit être complètement hydrolysée en acide gluconique pendant un temps de 30 minutes à 4 heures en présence ou non de l'acide fort alimentaire avant d'ajouter les protéines de lactosérum ou solubles du lait. Dans le cas contraire, c'est-à-dire sans hydrolyse complète de la GDL, les protéines précipiteraient.

Il convient de noter que le choix de la GDL était initialement incohérent à la volonté d'une acidification rapide des protéines nécessaire à leur stabilité puisque l'acidification produite par la GDL est lente. Cependant, lorsque la GDL est hydrolysée avant ajout des protéines, elle procure un avantage organoleptique supérieur aux autres acides faibles par une acidité moins prononcée pour un même pH.

A l'issue du procédé, le pH de la composition se trouve entre 2 et 4,5. De telles valeurs de pH permettent de maintenir les bonnes propriétés organoleptiques dans la composition conditionnée.

Selon un autre mode de réalisation, le procédé de préparation de la composition nutritionnelle selon l'invention comprend les étapes suivantes :
- préparation d'une matrice comprenant au moins 10 % d'eau, en poids, par rapport au poids total de la composition,
- ajout d'acide gluconique
- ajout dans la matrice d'un acide fort alimentaire avant, concomitamment ou après l'ajout d'acide gluconique,
- ajout des protéines de lactosérum ou des protéines solubles du lait dans la matrice lorsque le pH a atteint une valeur inférieure à 2,
- traitement thermique,
- conditionnement,

Ainsi, de manière alternative, de l'acide gluconique peut être utilisé à la place de la glucono delta lactone.

Avantageusement, l'acide fort alimentaire est l'acide phosphorique ou l'acide chlorhydrique.

Selon une caractéristique de l'invention, les protéines sont sous la forme d'un concentré, ou isolat, de protéines de lactosérum ou d'un concentré ou d'un isolat de protéines solubles du lait obtenu à partir de la phase soluble du lait mais non issu du lactosérum, préférentiellement du lait de vache.

Selon un mode de réalisation préféré de l'invention, l'eau contenue dans la matrice est une eau osmosée.

L'eau osmosée est une eau qui a été purifiée par un procédé d'osmose inverse pour produire une eau pure à 99%. L'utilisation d'une eau osmosée permet de limiter la quantité d'acide à ajouter pour abaisser le pH de la matrice et donc d'améliorer la stabilité et le goût, moins acide, du produit.

Préférentiellement, la glucono delta lactone ou l'acide gluconique sont ajoutés à hauteur de 0,05 à 3 %, préférentiellement 0,1 à 3 %, en poids par rapport au poids total de la composition.

Préférentiellement encore, l'acide fort alimentaire est ajouté à hauteur de 0,1 à 1 %, en poids par rapport au poids total de la composition.

Selon un mode de réalisation de l'invention, le procédé peut comporter, de plus, avant l'étape de traitement thermique, au moins une étape d'ajout d'au moins une protéine d'origine laitière isolée, telle que de la béta lactoglobuline ou de l'alpha lactalbumine, en plus du concentré, ou isolat, de protéines de lactosérum ou du concentré ou isolat de protéines solubles du lait obtenu à partir de la phase soluble du lait.

Selon un mode de réalisation de l'invention, le procédé peut comporter, de plus, avant l'étape de traitement thermique, au moins une étape d'ajout d'au moins un composé choisi parmi les minéraux, oligo-éléments, vitamines, acides aminés, glucides, colorants, arômes, lipides, épaississants, texturants, extraits végétaux, concentrés végétaux, concentrés de fruits ou légumes, poudres de fruits ou légumes, purées et jus de fruits ou de légumes, céréales, farines végétales, autres protéines que les protéines d'origine laitière, telles que des protéines d'origine végétale, ingrédients dérivés du lait autre que les protéines, émulsifiants, enzymes, ferments, fibres ou tout autre additif alimentaire autorisé.

Avantageusement, l'étape de traitement thermique comprend des étapes de préchauffage de la matrice entre 60 à 90 °C durant 1 à 60 secondes, de traitement thermique à une température entre 90 et 130°C durant 1 à 10 secondes, d'homogénéisation à une pression de 20 à 400 bars et de refroidissement entre 5 et 25°C. L'étape de traitement thermique peut être réalisée de manière directe par injection de vapeur, de manière indirecte à l'aide d'un échangeur à plaques ou tubulaire ou encore par autoclave.

La présente invention concerne encore une composition nutritionnelle stable et traitée thermiquement présentant un pH compris entre 2 et 4,5 et comprenant entre 2 et 9 g de protéines solubles de lait ou de protéines de lactosérum pour 100 ml de composition liquide et, à titre d'acide, de l'acide gluconique et un acide fort alimentaire.

Une telle composition peut être obtenue par la mise en oeuvre d'un procédé selon l'invention tel que décrit précédemment. Elle présente ainsi toutes les caractéristiques avantageuses recherchées dans le cadre de l'invention, c'est-à-dire, une stabilité dans le temps non seulement d'un point de vue microbiologique mais également d'un point de vue des protéines, sans phénomènes de décantation ou dénaturation des protéines, ainsi qu'un goût agréable et légèrement acide.

Avantageusement, la composition comprend entre 0,1 et 1 % d'acide fort alimentaire, préférentiellement d'acide phosphorique ou chlorhydrique, en poids par rapport au poids total de la composition.

Selon un mode de réalisation préféré de l'invention, la composition ne comprend pas d'autres acides que l'acide gluconique, l'acide phosphorique ou l'acide chlorhydrique.

Avantageusement, la composition comprend entre 0,05 et 3 % d'acide gluconique, en poids par rapport au poids total de la composition.

### Les protéines de lactosérum ou protéines solubles du lait :

Les protéines de lactosérum ou les protéines solubles du lait sont sous la forme d'un concentré, ou isolat, de protéines de lactosérum ou encore d'un concentré ou d'un isolat de protéines solubles du lait obtenu à partir de la phase soluble du lait mais non issu du lactosérum. Préférentiellement les protéines sont issues du lait de vache.

Au sens de l'invention, on entend par « protéines de lactosérum» et « protéines solubles du lait», la béta lactoglobuline, l'alpha-lactalbumine, les immunoglobulines et le sérum albumine dérivés d'un lait de mammifère, en particulier d'un ruminant tel qu'une vache ou une chèvre.

On entend par « concentré de lactosérum », ou WPC, un concentré de protéines de lactosérum contenant au moins 30% desdites protéines, préférentiellement au moins 70%, plus préférentiellement au moins 80%, et par « isolat de protéines de lactosérum », ou WPI, un isolat de protéines de lactosérum contenant au moins 80%, préférentiellement au moins 89,5 % desdites protéines. Il peut s'agir d'un concentré ou d'un isolat de lactosérum, le lactosérum étant obtenu par une étape de coagulation enzymatique ou chimique du lait, préférentiellement du lait de vache.

Un « concentré ou isolat de protéines solubles de lait » comprend, de manière préférée, un concentré ou un isolat de protéines solubles du lait obtenu à partir de la phase soluble du lait, préférentiellement du lait de vache, c'est-à-dire du lait écrémé, ou demi-écrémé et non du lactosérum, par un procédé comportant uniquement des étapes de filtration sur membranes dont une étape de microfiltration du lait écrémé ou demi-écrémé. Cette étape permet d'éliminer la caséine du lait sans faire intervenir d'étape de réaction enzymatique ou chimique, au contraire des procédés d'obtention des concentrés ou isolats de lactosérums habituellement décrits.

### Autres protéines

En complément, ou supplément, au concentré ou isolat de protéines solubles de lait ou de lactosérum déjà présent dans la composition, il est possible d'ajouter au moins une autre protéine d'origine laitière sous forme isolée, telle que de la béta lactoglobuline, de l'alpha-lactalbumine ou un mélange. Un tel ajout est utile lorsque l'on souhaite que la composition soit enrichie en l'une de ces protéines.

Des protéines d'autre origine que laitière peuvent en outre être ajoutées, telles que des protéines d'origine végétale.

### Les agents régulateurs de pH

Comme mentionné précédemment en lien avec le procédé de préparation d'une composition selon l'invention, les agents régulateurs de pH utilisés sont la glucono delta lactone ou l'acide gluconique en combinaison avec un acide fort alimentaire tel que l'acide phosphorique ou l'acide chlorhydrique.

Au sens de l'invention, un acide fort alimentaire est tout acide répondant à la définition scientifique connue d'un acide fort, mais autorisé par la législation dans la formulation de compositions nutritionnelles.

Préférentiellement, l'acide fort alimentaire utilisé est l'acide phosphorique ou l'acide chlorhydrique. L'ajout d'un autre acide, par exemple un acide faible tel que l'acide citrique, est envisageable en complément. Avantageusement cependant, les seuls agents régulateurs de pH utilisés sont la glucono delta lactone ou l'acide gluconique l'acide phosphorique ou l'acide chlorhydrique.

### Les minéraux, oligoéléments et vitamines :

De manière avantageuse, la composition comprend au moins un autre composant choisi parmi les minéraux, oligo-éléments, vitamines, acides aminés, glucides, colorants, arômes, lipides, épaississants, texturants, extraits végétaux, concentrés végétaux, concentrés, purées et jus de fruits, céréales, farines végétales, autres protéines que les protéines solubles de lait, ingrédients dérivés du lait autre que les protéines solubles du lait, émulsifiants, enzymes, ferments, fibres ou tout autre additif alimentaire autorisé.

Les minéraux et vitamines peuvent être ajoutés dans la composition de manière à couvrir les apports nutritionnels conseillés. Les minéraux et oligoéléments sont en effet essentiels au maintien de la bonne santé. Des carences en l'un ou l'autre de ces composés peuvent avoir des conséquences non négligeables et entraîner des troubles de la santé tels que l'ostéoporose en cas de déficience en manganèse, calcium ou vitamine D, ou des maladies cardio-vasculaires en cas de déficiences en potassium.

Ainsi, la composition comprend à titre de minéraux, du sodium, du potassium, du calcium, du chlore, du phosphore ou leurs mélanges.

A titre d'oligoéléments, la composition peut comprendre du fer, du zinc, du cuivre, du manganèse, du silicium, du sélénium, du chrome, ou leurs mélanges. Les oligoéléments et minéraux peuvent être ajoutés par exemple à hauteur de 0,001 à 0,5 %, en poids, par rapport au poids total de la composition.

En ce qui concerne le calcium, son ajout dans une composition nutritionnelle a pour conséquence généralement de rendre le produit instable dans le temps, en provoquant des phénomènes de dépôts. Le choix de la source de calcium ainsi que la quantité de cette source permettent d'éviter de tels effets indésirables.

Ainsi, selon un autre mode de réalisation, l'invention comprend, à titre de minéraux, une source de calcium préférentiellement choisie parmi le lactate de calcium, le citrate de calcium, le phosphate de calcium ou leurs mélanges.

Les utilisations d'un lactate de calcium, entre 0,1% et 0,5%, en poids, ou la combinaison de phosphate de calcium, entre 0,001% et 0,1%, et d'un citrate de calcium, entre 0,05% et 0,13%, sont préférées.

A titre de vitamines, la composition peut comprendre la vitamine A, B1, B2, B5, B6, B8, B9, B12, C, D, E, K, PP ou leurs mélanges. L'apport en vitamines, par exemple, chez la personne âgée ou en dénutrition est important puisque des carences sont relativement souvent observées, notamment chez la personne âgée isolée. Les vitamines sont impliquées dans de nombreux mécanismes physiologiques et participent au maintien d'un bon état général de santé. La composition peut ainsi inclure des vitamines à hauteur de 0,002 à 0,5 %, en poids, par rapport au poids total de la composition.

En ce qui concerne les compositions contenant de la vitamine C, notamment lorsqu'elles se présentent sous la forme de jus de fruits ou d'ajouts de vitamines, des phénomènes de brunissement sont généralement observés au cours du temps du fait de la dégradation de la vitamine C au cours des traitements thermiques et lors de réactions de type Maillard. De manière à résoudre ce problème, la composition comprend avantageusement de la L-cystéine pour un dosage de 0,001 à 0,01%, en combinaison avec de la vitamine C pour un dosage de 0,002 à 0,06%.

### Les glucides :

A titre de glucides, la composition peut comprendre des oligosaccharides ou polysaccharides digestibles tels que du lactose, du saccharose, du glucose ou des oligosaccharides ou polysaccharides non digestibles tels que l'inuline ou du fructo-oligosaccharides, ou encore tout autre glucide autorisé dans l'industrie alimentaire. La fraction glucidique peut représenter jusqu'à 30 %, en poids, du poids total de la composition.

Lorsque la composition selon l'invention se trouve sous la forme d'une boisson hypercalorique, ou riche en glucide, la fraction glucidique est composée en partie ou en totalité de maltodextrine présentant un DE supérieur à 6. L'utilisation d'une telle maltodextrine permet d'éviter les réactions de Maillard lors des traitements thermiques responsables de défauts dans le temps tels que des dépôts au fond du contenant, une trop forte viscosité, une modification du goût.

### La matière grasse :

A titre de fraction lipidique, la composition peut contenir au moins une source d'acides gras polyinsaturés oméga 3, tels que de l'acide α-linolénique, de l'acide éicosapentaénoïque ou de l'acide docosahexaénoïque, préférentiellement de l'acide docosahexaénoïque, ou leurs mélanges. La composition peut encore comprendre une source d'acides gras polyinsaturés oméga 6. Le ratio oméga 6 sur oméga 3 est préférentiellement compris entre 1 et 20, plus préférentiellement entre 1 et 5. La source d'acides gras oméga 3 est par exemple choisie parmi la matière grasse laitière issue de ruminant, l'huile de poisson, les algues, les graines de colza, l'huile de lin ou toute autre huile d'origine marine ou végétale riche en oméga 3. La source d'acides gras oméga 6 est par exemple choisie parmi l'huile de sésame, l'huile de carthame, l'huile de pépins de raisins ou toute autre huile d'origine marine ou végétale riche en oméga 6.

La fraction lipidique de la composition peut représenter préférentiellement jusqu' à 30 % du poids total de la composition.

Néanmoins, la présence de matière grasse dans une composition selon l'invention n'est pas nécessaire et ainsi, de manière préférée, la composition en est dépourvue.

En particulier, la composition selon l'invention comprendra au moins un autre composant choisi parmi les minéraux, oligo-éléments, vitamines, acides aminés, glucides, colorants, arômes, lipides, épaississants, texturants, extraits végétaux, concentrés végétaux, concentrés de fruits ou légumes, poudres de fruits ou légumes, purées et jus de fruits ou de légumes, céréales, farines végétales, autres protéines que les protéines d'origine laitière, ingrédients dérivés du lait autre que les protéines, émulsifiants, enzymes, ferments, fibres ou tout autre additif alimentaire autorisé.

### Les formes

Selon l'invention, la composition se présente sous une forme liquide, préférentiellement sous la forme d'une boisson telle qu'un jus de fruit, d'une soupe ou encore d'une solution parénterale.

Au sens de l'invention, une composition est liquide si elle présente les caractéristiques d'un fluide, et la capacité à couler lorsque son contenant est incliné. Une telle composition présente une viscosité inférieure à 200 mPa.s mesurée à 20°C sur un viscosimètre.

### Densité énergétique :

Avantageusement, la composition présente une densité énergétique comprise entre 8 et 300 Kcal/100mL ou 100 g et préférentiellement entre 100 et 150 Kcal/100ml ou 100g.

### Conditionnement :

Les compositions selon l'invention peuvent être conditionnées de différentes façons, par exemple sous forme d'une dose journalière ou sous forme de doses journalières fractionnées.

Le conditionnement en bouteille peut être prévu entre 50 ml et 1L, préférentiellement 200ml. La bouteille est préférentiellement imperméable à l'oxygène et à la lumière.

L'invention concerne encore une composition telle que décrite précédemment pour son utilisation dans l'alimentation de la personne adulte, active, sportive, âgée ou malade, ou en situation de dénutrition ou risquant de l'être, ou en nutrition infantile.

L'invention sera mieux comprise à la lecture des exemples de réalisation qui suivent, qui se veulent illustratifs et non limitatifs.

### Exemple 1 : Formule sous forme liquide

**Tableau 1**

| **Ingrédients - additifs :** | **Nature** | **Formule en kg/100kg :** |
|---|---|---|
| **Eau osmosée** | | **10 à 90%** |
| **Acide Phosphorique (concentration 75%)** | | **0,1 à 1%** |
| **GDL (glucono delta lactone)** | | **0,05 à 3%** |
| **Protéines de lactosérum* ou protéines solubles du lait*** | | **2 à 9%** |
| Glucides | | 0 à 30% |
| Minéraux | Mix minéral : Sulfate de cuivre, sélénite de sodium, sulfate de zinc, pyrophosphate de fer, chlorure de chrome, chlorure de magnésium | 0,001 à 0,5% |
| Vitamines | Vitamines D, E, PP, K, B1, B2, B5, B6, B8, B12, B9 | 0,002 à 0,5% |
| Concentré de jus fruits | Degré Brix de 30 à 100 | 0 à 10% |
| Arômes | Naturels ou non naturels | 0 à 2% |
| Colorants | | 0 à 2% |
| pH final ciblé | | 2-4,5 |

| | | |
|---|---|---|
| ** sous forme d'isolat (WPI) : taux de protéines d'au moins 80%, en poids* | | |

Procédé de préparation : une boisson liquide est préparée à partir des ingrédients indiqués dans le Tableau 1, à l'aide d'un procédé comportant les étapes suivantes :
- préparation d'une matrice comprenant au moins 10-90 % d'eau osmosée, en poids, par rapport au poids total de la composition,
- ajout d'acide phosphorique
- ajout dans la matrice de la glucono delta lactone
- hydrolyse de la glucono delta lactone durant 30 min. à 4 h,
- éventuellement ajout de glucides,
- ajout des minéraux,
- vérification du pH,
- si le pH a atteint une valeur inférieure à 2, alors ajout des protéines solubles dans la matrice,
- éventuellement ajout des arômes, colorants, vitamines, lipides, épaississants, concentrés de jus de fruits,
- traitement thermique : préchauffage de la matrice entre 60 à 90 °C durant 1 à 60 secondes, puis injection de vapeur directe ou indirecte (échangeur à plaques ou échangeur tubulaire) à une température comprise entre 90° et 130°C durant 1 à 10 secondes, puis homogénéisation à une pression de 20 à 400 bars et refroidissement entre 5 et 25°C
- conditionnement en bouteilles imperméables à l'oxygène et opaque, puis injection d'azote dans l'espace de tête.

Il est à noter que durant toute la durée du procédé, toute incorporation d'air est évitée de manière à inhiber toute réaction responsable de brunissement.

### Exemple 2 : Formule sous forme liquide fruitée orange

**Ingrédients :** Eau, sirop de glucose, jus d'orange à base de concentré (11,6%), sucre, isolat de protéines solubles natives du lait, acidifiants (E575, E338), arôme, minéraux (chlorure de magnésium, pyrophosphate de fer, sulfate de zinc, sélénite de sodium, sulfate de cuivre, chlorure de chrome), vitamines (PP, E, B5, B1, B6, B2, B9, H,K1, D3, B12), colorant (E160a).

La formule est préparée selon le procédé décrit en lien avec l'exemple 1. Le Tableau 2 indique les caractéristiques du produit prêt à consommer.

**Tableau 2**

| **Analyse Nutritionnelle 100 ml :** | | **valeurs** |
|---|---|---|
| Energie / Energie (kcal/KJ) | | 135/572 |
| Protéines (g) (12 % AET) | | 4,1 |
| Glucides (g) (87 % AET) | | 29,5 |
| | dont sucres (g) | 10,2 |
| | dont lactose (g) | < 0,5 |
| Matières grasses (g) (0 % AET) | | 0 |
| | dont saturés (g) | 0 |
| | dont monoinsaturés (g) | 0 |
| | dont polyinsaturés (g) | 0 |
| Fibres (g) | | < 0,5 |
| Sodium (mg) | | 15 |

| **Minéraux** | | |
|---|---|---|
| -K (mg) | | 25,3 |
| -Cl (mg) | | 55,3 |
| -Ca (mg) | | 18,8 |

**Tableau 2 (suite)**

| | |
|---|---|
| -P (mg) | 89,9 |
| -Mg (mg) | 17,5 |

| **Oligo-éléments** | |
|---|---|
| -Fe (mg) | 1,7 |
| -Zn (mg) | 1,5 |
| -Cu (µg) | 210 |
| -Se (µg) | 10 |
| -Cr (µg) | 11 |

| **Vitamines** | |
|---|---|
| -A3 (µg) | 0 |
| - D3 (µg) | 2,1 |
| - E (mg alpha tocophérol ) | 2,1 |
| - K (µg) | 6,1 |
| - B1 (mg) | 0,32 |
| - B2 (mg) | 0,3 |
| - B6 (mg) | 0,31 |
| - B12 (µg) | 0,52 |
| - PP (mg NE) | 2,2 |
| - B9 (µg) | 35,2 |
| - B5 (mg) | 1,3 |
| - H (µg ) | 7,2 |
| **pH** | |

### Exemple 3 : Compote (non conforme à l'invention)

**Tableau 3**

| **Ingrédients - additifs :** | **Formule en kg/100kg** : |
|---|---|
| **Eau osmosée** | **50 à 80%** |
| **Acide Phosphorique (concentration 75%)** | **0,1 à 1.0%** |
| **GDL (glucono delta lactone)** | **0,05 à 3%** |
| **Protéines de lactosérum* ou protéines solubles du lait*** | **2 à 9%** |
| Maltodextrine | 5 à 30% |
| Sucre semoule | 5 à 10% |
| Vitamines | 0,002 à 0,5% |
| Poudre de pomme | 3,5 à 5,5% |
| Dextrine | 2,0 à 5,0% |
| Huile de colza et prémix tocophérols | 0 à 1,5% |
| Amidon | 0 à 2,0% |
| Arôme pomme (Naturel ou non) | 0 à 1,0% |
| Chlorure de magnésium hexahydrate | 0,1 à 0,3% |
| pH final | 2-4,5 |

| | |
|---|---|
| ** sous forme d'isolat (WPI) : taux de protéines d'au moins 80%, en poids* | |

Procédé de préparation : une compote de pommes est préparée à partir des ingrédients indiqués dans le Tableau 3, à l'aide d'un procédé conforme à l'invention et comportant les étapes suivantes :
- ajout d'acide phosphorique dans l'eau osmosée à température ambiante
- ajout dans la matrice de la glucono delta lactone
- hydrolyse de la glucono delta lactone durant 30 min. à 4 h,
- ajout de maltodextrine, dextrine et amidon,
- vérification du pH,
- si le pH a atteint une valeur inférieure à 2, alors ajout des protéines solubles, prémélangées avec le sucre, dans la matrice,
- ajout des autres composés,
- traitement thermique : préchauffage de la matrice entre 60 à 90 °C durant 1 à 60 secondes, puis injection de vapeur (directe ou indirecte) à une température comprise entre 90° et 130°C durant 1 à 10 secondes, puis homogénéisation à une pression de 20 à 400 bars et refroidissement entre 5 et 25°C
- conditionnement en pots.

La compote obtenue présente les caractéristiques nutritionnelles suivantes :
Valeur énergétique 150 kcal pour 100 g.
Lipides = 0.8%
Protéines = 5.5%
Glucides = 31%

## Revendications

1. Procédé de préparation d'une composition nutritionnelle liquide de viscosité inférieure à 200 mPas.s mesuré à 20°c sur un viscosimètre, stable aux traitements thermiques, comprenant entre 2 et 9 g de protéines de lactosérum pour 100 ml de composition, et présentant un pH compris entre 2 et 4,5, le procédé de préparation comprenant les étapes suivantes :
- préparation d'une matrice comprenant au moins 10 % d'eau, en poids, par rapport au poids total de la composition,
- ajout dans la matrice de glucono delta lactone
- hydrolyse de la glucono delta lactone durant 30 min. à 4 h,
- ajout d'un acide fort alimentaire avant, concomitamment ou après l'ajout ou l'hydrolyse da la glucono delta lactone,
- ajout des protéines de lactosérum dans la matrice après l'hydrolyse de la glucono delta lactone lorsque le pH a atteint une valeur inférieure à 2,
- traitement thermique,
- conditionnement.

2. Procédé de préparation d'une composition nutritionnelle liquide de viscosité inférieure à 200 mPas.s mesuré à 20°c sur un viscosimètre, stable aux traitements thermiques comprenant entre 2 et 9 g de protéines de lactosérum pour 100 ml de composition, et présentant un pH compris entre 2 et 4,5, le procédé de préparation comprenant les étapes suivantes :
- préparation d'une matrice comprenant au moins 10 % d'eau, en poids, par rapport au poids total de la composition,
- ajout dans la matrice d'acide gluconique,
- ajout d'un acide fort alimentaire avant, concomitamment ou après l'ajout de l'acide gluconique
- ajout des protéines de lactosérum dans la matrice lorsque le pH a atteint inférieure à 2,
- traitement thermique,
- conditionnement.

3. Procédé selon la revendication 1 ou 2, caractérisé en ce les protéines sont sous la forme d'un concentré, ou isolat, de protéines de lactosérum ou d'un concentré ou un isolat de protéines solubles du lait obtenu à partir de la phase soluble du lait mais non issu du lactosérum, préférentiellement du lait de vache.

4. Procédé selon la revendication 3, **caractérisé en ce qu'**il comprend au moins une étape d'ajout d'au moins une protéine d'origine laitière isolée, telle que de la béta lactoglobuline ou de l'alpha lactalbumine, en plus du concentré, ou isolat, de protéines de lactosérum ou du concentré ou isolat de protéines solubles du lait obtenu à partir de la phase soluble du lait.

5. Procédé selon l'une des revendications 1 à 4, **caractérisé en ce que** l'acide fort alimentaire est l'acide phosphorique ou l'acide chlorhydrique.

6. Procédé selon l'une des revendications 1 à 5, **caractérisé en ce que** l'eau est une eau osmosée ou de ville.

7. Procédé selon l'une des revendications 1 à 6, **caractérisé en ce que** la glucono delta lactone ou l'acide gluconique sont ajoutés à hauteur de 0,05 à 3 %, préférentiellement 0,1 à 3 %, en poids par rapport au poids total de la composition.

8. Procédé selon l'une des revendications 1 à 7, **caractérisé en ce que** l'acide fort alimentaire est ajouté à hauteur de 0,1 à 1 %, en poids par rapport au poids total de la composition.

9. Procédé selon l'une des revendications 1 à 8, **caractérisé en ce que** l'étape de traitement thermique comprend le préchauffage de la matrice entre 60 à 90 °C durant 1 à 60 secondes, le traitement thermique à une température comprise entre 90 et 130°C durant 1 à 10 secondes, l'homogénéisation à une pression de 20 à 400 bars et le refroidissement entre 5 et 25°C.

10. Procédé selon l'une des revendications 1 à 9, **caractérisé en ce qu'**il comporte, de plus, avant l'étape de traitement thermique, au moins une étape d'ajout d'au moins un composé choisi parmi les minéraux, oligo-éléments, vitamines, acides aminés, glucides, colorants, arômes, lipides, épaississants, texturants, extraits végétaux, concentrés végétaux, concentrés de fruits ou légumes, poudres de fruits ou légumes, purées et jus de fruits ou de légumes, céréales, farines végétales, autres protéines que les protéines d'origine laitière, ingrédients dérivés du lait autre que les protéines, émulsifiants, enzymes, ferments, fibres ou tout autre additif alimentaire autorisé.

11. Composition nutritionnelle liquide stable et traitée thermiquement, obtenue par un procédé selon l'une des revendications 1 à 10, présentant un pH compris entre 2 et 4,5 et comprenant entre 2 et 9 g de protéines de lactosérum pour 100 ml de composition et, à titre d'acide, de l'acide gluconique et un acide fort alimentaire, ladite composition présentant une viscosité inférieure à 200 mPa.s mesurée à 20°C sur un viscosimètre.

12. Composition selon la revendication 11, **caractérisée en ce que** les protéines sont sous la forme d'un concentré, ou isolat, de protéines de lactosérum ou d'un concentré ou un isolat de protéines solubles du lait obtenu à partir de la phase soluble du lait mais non issu du lactosérum, préférentiellement du lait de vache.

13. Composition selon la revendication 12, **caractérisée en ce qu'**elle se présente sous la forme d'une boisson telle qu'un jus de fruit, d'une soupe ou encore d'une solution parentérale.

14. Composition selon l'une des revendications 11 à 13, **caractérisée en ce qu'**elle comprend au moins un autre composant choisi parmi les minéraux, oligo-éléments, vitamines, acides aminés, glucides, colorants, arômes, lipides, épaississants, texturants, extraits végétaux, concentrés végétaux, concentrés de fruits ou légumes, poudres de fruits ou légumes, jus de fruits ou de légumes, , autres protéines que les protéines d'origine laitière, ingrédients dérivés du lait autre que les protéines, émulsifiants, enzymes, ferments, fibres ou tout autre additif alimentaire autorisé.

15. Composition selon l'une des revendications 11 à 14, **caractérisée en ce que** l'acide fort alimentaire est l'acide phosphorique ou l'acide chlorhydrique.

16. Composition selon la revendication 15, **caractérisée en ce qu'**elle comprend entre 0,1 et 1 % d'acide phosphorique ou chlorhydrique.

17. Composition selon la revendication 15, **caractérisée en ce qu'**elle ne comprend pas d'autres agents régulateurs de pH que l'acide gluconique, l'acide phosphorique ou l'acide chlorhydrique.

18. Composition selon l'une des revendications 11 à 17, **caractérisée en ce qu'**elle comprend entre 0,05 et 3 % d'acide gluconique.

19. Composition selon l'une des revendications 14 à 18, **caractérisée en ce qu'**elle comprend entre 0,02 et 0,06% de vitamine C en combinaison avec 0,001 à 0,01% de L-cystéine.

20. Composition selon l'une des revendications 14 à 19, **caractérisée en ce qu'**elle comprend, à titre de minéraux, une source de calcium préférentiellement choisie parmi le lactate de calcium, le citrate de calcium, le phosphate de calcium.

21. Composition selon l'une des revendications 11 à 20, **caractérisée en ce qu'**elle présente une densité énergétique comprise entre 8 et 300 Kcal/100mL ou 100g et préférentiellement entre 100 et 150 Kcal/100m1 ou 100g.

22. Composition selon l'une des revendications 11 à 21 pour son utilisation dans l'alimentation de la personne âgée, malade, ou en situation de dénutrition ou risquant de l'être, ou en nutrition infantile.

23. Utilisation d'une composition selon l'une des revendications 11 à 22 dans l'alimentation de la personne adulte, active ou sportive.

## Patentansprüche

1. Verfahren zur Herstellung einer flüssigen Nährstoffzusammensetzung mit einer Viskosität unter 200 mPas.s gemessen bei 20 °C mit einem Viskosimeter, die stabil gegenüber Wärmebehandlungen ist, zwischen 2 und 9 g Molkeproteine pro 100 ml Zusammensetzung umfasst und einen pH-Wert zwischen 2 und 4,5 aufweist, wobei das Herstellungsverfahren die folgenden Schritte umfasst:
- Herstellen einer Matrix, die wenigstens 10 Gewichts-% Wasser im Verhältnis zum Gesamtgewicht der Zusammensetzung umfasst,
- Hinzugeben von Glucono-delta-Lacton zur Matrix
- Hydrolyse des Glucono-delta-Lactons für 30 min bis 4 h,
- Hinzugeben einer starken Lebensmittelsäure vor, zeitgleich zu oder nach der Hinzugabe oder Hydrolyse des Glucono-delta-Lactons,
- Hinzugeben der Molkeproteine zur Matrix nach der Hydrolyse des Glucono-delta-Lactons, wenn der pH-Wert einen Wert unter 2 erreicht hat,
- Wärmebehandlung,
- Abfüllen.

2. Verfahren zur Herstellung einer flüssigen Nährstoffzusammensetzung mit einer Viskosität unter 200 mPas.s gemessen bei 20 °C mit einem Viskosimeter, die stabil gegenüber Wärmebehandlungen ist, zwischen 2 und 9 g Molkeproteine pro 100 ml Zusammensetzung umfasst und einen pH-Wert zwischen 2 und 4,5 aufweist, wobei das Herstellungsverfahren die folgenden Schritte umfasst:
- Herstellen einer Matrix, die wenigstens 10 Gewichts-% Wasser im Verhältnis zum Gesamtgewicht der Zusammensetzung umfasst,
- Hinzugeben von Gluconsäure zur Matrix,
- Hinzugeben einer starken Lebensmittelsäure vor, zeitgleich zu oder nach der Hinzugabe der Gluconsäure
- Hinzugeben der Molkeproteine zur Matrix, wenn der pH-Wert unter 2 erreicht hat,
- Wärmebehandlung,
- Abfüllen.

3. Verfahren nach Anspruch 1 oder 2, **dadurch gekennzeichnet, dass** die Proteine in Form eines Molkeproteinkonzentrats oder -isolats oder eines Konzentrats oder eines Isolats von löslichen Proteinen der Milch vorliegen, das aus der löslichen Phase der Milch gewonnen ist, jedoch nicht aus der Molke stammt, vorzugsweise aus Kuhmilch.

4. Verfahren nach Anspruch 3, **dadurch gekennzeichnet, dass** es wenigstens einen Schritt des Hinzugebens wenigstens eines isolierten Proteins aus Milch, wie etwa Beta-Laktoglobulin oder Alpha-Laktalbumin, zusätzlich zum Molkeproteinkonzentrat oder -isolat oder Konzentrat oder Isolat von löslichen Milchproteinen der Milch, das aus der löslichen Phase der Milch gewonnen ist, umfasst.

5. Verfahren nach einem der Ansprüche 1 bis 4, **dadurch gekennzeichnet, dass** die starke Lebensmittelsäure Phosphorsäure oder Salzsäure ist.

6. Verfahren nach einem der Ansprüche 1 bis 5, **dadurch gekennzeichnet, dass** das Wasser ein Osmose- oder Leitungswasser ist.

7. Verfahren nach einem der Ansprüche 1 bis 6, **dadurch gekennzeichnet, dass** das Glucono-delta-Lacton oder die Gluconsäure in Höhe von 0,05 bis 3, vorzugsweise 0,1 bis 3 Gewichts-% im Verhältnis zum Gesamtgewicht der Zusammensetzung hinzugegeben wird.

8. Verfahren nach einem der Ansprüche 1 bis 7, **dadurch gekennzeichnet, dass** die starke Lebensmittelsäure in Höhe von 0,1 bis 1 Gewichts-% im Verhältnis zum Gesamtgewicht der Zusammensetzung hinzugeben wird.

9. Verfahren nach einem der Ansprüche 1 bis 8, **dadurch gekennzeichnet, dass** der Wärmebehandlungsschritt das Vorerhitzen der Matrix auf 60 bis 90 °C für 1 bis 60 Sekunden, die Wärmebehandlung bei einer Temperatur zwischen 90 und 130 °C für 1 bis 10 Sekunden, das Homogenisieren bei einem Druck von 20 bis 400 bar und das Abkühlen auf 5 bis 25 °C umfasst.

10. Verfahren nach einem der Ansprüche 1 bis 9, **dadurch gekennzeichnet, dass** es vor dem Wärmebehandlungsschritt zusätzlich wenigstens einen Schritt des Hinzugebens wenigstens einer Verbindung umfasst, die aus Mineralien, Spurenelementen, Vitaminen, Aminosäuren, Kohlenhydraten, Farbstoffen, Aromastoffen, Lipiden, Verdickungsmitteln, Texturierungsmitteln, Pflanzenextrakten, Pflanzenkonzentraten, Frucht- oder Gemüsekonzentraten, Frucht- oder Gemüsepulvern, Frucht- oder Gemüsepürees und - säften, Getreiden, Pflanzenmehlen, anderen Proteinen als Proteine aus Milch, anderen aus Milch gewonnenen Inhaltsstoffen als Proteine, Emulgatoren, Enzymen, Fermenten, Ballaststoffen oder beliebigen anderen zugelassenen Lebensmittelzusatzstoffen ausgewählt ist.

11. Stabile und wärmebehandelte flüssige Nährstoffzusammensetzung, die durch ein Verfahren nach einem der Ansprüche 1 bis 10 gewonnen wird, einen pH-Wert zwischen 2 und 4,5 aufweist und zwischen 2 und 9 g Molkeproteine pro 100 ml Zusammensetzung und als Säure Gluconsäure und eine starke Lebensmittelsäure umfasst, wobei die Zusammensetzung eine Viskosität unter 200 mPas.s aufweist, gemessen bei 20 °C mit einem Viskosimeter.

12. Zusammensetzung nach Anspruch 11, **dadurch gekennzeichnet, dass** die Proteine in Form eines Molkeproteinkonzentrats oder -isolats oder eines Konzentrats oder eines Isolats von löslichen Proteinen der Milch vorliegen, das aus der löslichen Phase der Milch gewonnen ist, jedoch nicht aus der Molke stammt, vorzugsweise aus Kuhmilch.

13. Zusammensetzung nach Anspruch 12, **dadurch gekennzeichnet, dass** sie in Form eines Getränks, wie etwa eines Fruchtsafts, einer Suppe oder einer parenteralen Lösung vorliegt.

14. Zusammensetzung nach einem der Ansprüche 11 bis 13, **dadurch gekennzeichnet, dass** sie wenigstens einen weiteren Bestandteil umfasst, der aus Mineralien, Spurenelementen, Vitaminen, Aminosäuren, Kohlenhydraten, Farbstoffen, Aromastoffen, Lipiden, Verdickungsmitteln, Texturierungsmitteln, Pflanzenextrakten, Pflanzenkonzentraten, Frucht- oder Gemüsekonzentraten, Frucht- oder Gemüsepulvern, Frucht- oder Gemüsesäften, anderen Proteinen als Proteinen aus Milch, anderen aus Milch gewonnenen Inhaltsstoffen als Proteine, Emulgatoren, Enzymen, Fermenten, Ballaststoffen oder beliebigen anderen zugelassenen Lebensmittelzusatzstoffen ausgewählt ist.

15. Zusammensetzung nach einem der Ansprüche 11 bis 14, **dadurch gekennzeichnet, dass** die starke Lebensmittelsäure Phosphorsäure oder Salzsäure ist.

16. Zusammensetzung nach Anspruch 15, **dadurch gekennzeichnet, dass** sie zwischen 0,1 und 1 % Phosphor- oder Salzsäure umfasst.

17. Zusammensetzung nach Anspruch 15, **dadurch gekennzeichnet, dass** sie keine anderen pH-regulierenden Mittel als Gluconsäure, Phosphor- oder Salzsäure umfasst.

18. Zusammensetzung nach einem der Ansprüche 11 bis 17, **dadurch gekennzeichnet, dass** sie zwischen 0,05 und 3 % Gluconsäure umfasst.

19. Zusammensetzung nach einem der Ansprüche 14 bis 18, **dadurch gekennzeichnet, dass** sie zwischen 0,02 und 0,06 % Vitamin C in Kombination mit 0,001 bis 0,01 % L-Cystein umfasst.

20. Zusammensetzung nach einem der Ansprüche 14 bis 19, **dadurch gekennzeichnet, dass** sie als Mineralien eine Calciumquelle umfasst, die vorzugsweise aus Calciumlactat, Calciumcitrat, Calciumphosphat ausgewählt ist.

21. Zusammensetzung nach einem der Ansprüche 11 bis 20, **dadurch gekennzeichnet, dass** sie eine Energiedichte zwischen 8 und 300 Kcal/100 mL oder 100 g und vorzugsweise zwischen 100 und 150 Kcal/100 ml oder 100 g aufweist.

22. Zusammensetzung nach einem der Ansprüche 11 bis 21 zur Verwendung in der Ernährung von älteren, kranken oder unterernährten oder von Unterernährung bedrohten Menschen oder in der Kinderernährung.

23. Verwendung einer Zusammensetzung nach einem der Ansprüche 11 bis 22 in der Ernährung von erwachsenen, aktiven oder sportlichen Menschen.

## Claims

1. Method for preparing a liquid nutritional composition with a viscosity of less than 200 mPas.s measured at 20°C on a viscometer, stable to heat treatments, comprising between 2 and 9 g of whey proteins per 100 mL of composition, and having a pH of between 2 and 4.5, the preparation method comprising the following steps:
- preparation of a matrix comprising at least 10% water, by weight, relative to the composition total weight,
- addition of delta-gluconolactone to the matrix
- hydrolysis of the delta-gluconolactone for 30 min to 4 h,
- addition of a strong food acid before, at the same time as or after the addition or hydrolysis of the delta-gluconolactone,
- addition of whey proteins to the matrix after hydrolysis of the delta-gluconolactone when the pH has reached a value below 2,
- heat treatment,
- packaging.

2. Method for preparing a liquid nutritional composition with a viscosity of less than 200 mPas.s measured at 20°C on a viscometer, stable to heat treatments comprising between 2 and 9 g of whey proteins per 100 mL of composition, and having a pH of between 2 and 4.5, the preparation method comprising the following steps:
- preparation of a matrix comprising at least 10% water, by weight, relative to the composition total weight,
- addition of gluconic acid to the matrix,
- addition of a strong food acid before, at the same time as or after the addition of gluconic acid
- addition of whey proteins to the matrix when the pH is below 2,
- heat treatment,
- packaging.

3. Method of claim 1 or 2, **characterised in that** the proteins are in the form of a whey protein concentrate or isolate or a soluble milk protein concentrate or isolate obtained from the milk soluble phase but not from whey, preferably cow's milk.

4. Method of claim 3, **characterized in that** it comprises at least one step of adding at least one isolated dairy protein, such as beta-lactoglobulin or alpha-lactalbumin, in addition to the whey protein concentrate or isolate or the soluble milk protein concentrate or isolate obtained from the milk soluble phase.

5. Method of one of claims 1 to 4, **characterised in that** the strong food acid is phosphoric acid or hydrochloric acid.

6. Method of one of claims 1 to 5, **characterised in that** the water is osmosed or tap water.

7. Method of one of claims 1 to 6, **characterized in that** the delta-gluconolactone or gluconic acid are added in an amount of 0.05 to 3%, preferably 0.1 to 3%, by weight relative to the composition total weight.

8. Method of one of claims 1 to 7, **characterized in that** the strong food acid is added in an amount of 0.1 to 1% by weight relative to the composition total weight.

9. Method of one of claims 1 to 8, **characterized in that** the heat treatment step comprises preheating the matrix to between 60 and 90°C for 1 to 60 seconds, heat treatment at a temperature of between 90 and 130°C for 1 to 10 seconds, homogenization at a pressure of 20 to 400 bars and cooling to between 5 and 25°C.

10. Method of one of claims 1 to 9, **characterised in that** it further comprises, before the heat treatment step, at least one step of adding at least one compound selected from minerals, trace elements, vitamins, amino acids, carbohydrates, colourings, flavourings, lipids, thickeners, texturisers, plant extracts, plant concentrates, fruit or vegetable concentrates, fruit or vegetable powders, fruit or vegetable purées and juices, cereals, plant-based flours, proteins other than dairy proteins, ingredients derived from milk other than proteins, emulsifiers, enzymes, ferments, fibres or any other authorised food additive.

11. Stable, heat-treated liquid nutritional composition, obtained by a method of one of claims 1 to 10, having a pH of between 2 and 4.5 and comprising between 2 and 9 g of whey proteins per 100 mL of composition and, as acid, gluconic acid and a strong food acid, said composition having a viscosity of less than 200 mPa.s measured at 20°C on a viscometer.

12. Composition of claim 11, **characterized in that** the proteins are in the form of a whey protein concentrate or isolate or a soluble milk protein concentrate or isolate obtained from the milk soluble phase but not from whey, preferably cow's milk.

13. Composition of claim 12, **characterized in that** it is in the form of a drink such as a fruit juice, a soup, or a parenteral solution.

14. Composition of one of claims 11 to 13, **characterised in that** it comprises at least one other compound selected from minerals, trace elements, vitamins, amino acids, carbohydrates, colourings, flavourings, lipids, thickeners, texturisers, plant extracts, plant concentrates, fruit or vegetable concentrates, fruit or vegetable powders, fruit or vegetable juices, proteins other than dairy proteins, ingredients derived from milk other than proteins, emulsifiers, enzymes, ferments, fibres, or any other authorised food additive.

15. Composition of one of claims 11 to 14, **characterized in that** the strong food acid is phosphoric acid or hydrochloric acid.

16. Composition of claim 15, **characterized in that** it comprises between 0.1 and 1% phosphoric or hydrochloric acid.

17. Composition of claim 15, **characterized in that** it does not comprise any pH-regulating agents other than gluconic acid, phosphoric acid, or hydrochloric acid.

18. Composition of one of claims 11 to 17, **characterized in that** it comprises between 0.05 and 3% gluconic acid.

19. Composition of one of claims 14 to 18, **characterized in that** it comprises between 0.02 and 0.06% vitamin C in combination with 0.001 to 0.01% L-cysteine.

20. Composition of one of claims 14 to 19, **characterized in that** it comprises, as minerals, a calcium source preferably selected from calcium lactate, calcium citrate, and calcium phosphate.

21. Composition of one of claims 11 to 20, **characterized in that** it has an energy density of between 8 and 300 Kcal/100 mL or 100 g and preferably between 100 and 150 Kcal/100 mL or 100 g.

22. Composition of one of claims 11 to 21 for use in the diet of the elderly, ill, or undernourished person, or person at risk of undernourishment, or in infant nutrition.

23. Use of a composition of one of claims 11 to 22 in the diet of an adult, active or sporty person.
